# EUROPÄISCHE PATENTSCHRIFT

(11) **EP 4 111 144 B1**
(45) Veröffentlichungstag und Bekanntmachung des Hinweises auf die Patenterteilung: **06.03.2024**
(21) Anmeldenummer: 21702474.4
(22) Anmeldetag: 28.01.2021
(51) Int. Cl.: G01F 23/296, G01K 7/00, G01N 9/00, G01N 11/16, G01N 29/024

(54) **VIBRONISCHER MULTISENSOR**
VIBRONIC MULTI-SENSOR
MULTI-CAPTEUR VIBRONIQUE

(30) Priorität: 27.02.2020 DE 102020105214
(43) Veröffentlichungstag der Anmeldung: 04.01.2023
(73) Patentinhaber: Endress+Hauser SE+Co. KG, 79689 Maulburg (DE)
(72) Erfinder: SCHLEIFERBÖCK, Jan, 79595 Rümmingen (DE); LOPATIN, Sergey, 79540 Lörrach (DE)
(74) Vertreter: Koslowski, Christine Adelheid
(86) Internationale Anmeldenummer: PCT/EP2021/052001
(87) Internationale Veröffentlichungsnummer: WO 2021/170339

(56) Entgegenhaltungen:
- EP-A1- 0 903 563
- DE-A1-102004 011 377
- DE-A1-102015 112 055

## Beschreibung

Die Erfindung betrifft eine Vorrichtung zur Bestimmung und/oder Überwachung von zumindest einer Prozessgröße eines Mediums umfassend eine Sensoreinheit mit einer mechanisch schwingfähigen Einheit und mit einer Elektronik. Das Medium befindet sich in einem Behältnis, beispielsweise in einem Behälter oder in einer Rohrleitung.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten. Auch die EP 0 903 563 A1 offenbart eine Vorrichtung gemäß dem Stand der Technik.

Mit einem vibronischen Sensor lassen sich entsprechend mehrere Prozessgrößen bestimmen und für eine Charakterisierung des jeweiligen Prozesses heranziehen. In vielen Fällen werden für eine umfassende Prozessüberwachung und/oder -kontrolle allerdings weitere Informationen über den Prozess, insbesondere Kenntnis über weitere physikalische und/oder chemische Prozessgrößen und/oder-parameter benötigt. Dies kann beispielsweise durch die Integration weiterer Feldgeräte in den jeweiligen Prozess erreicht werden. Dann können die von den verschiedenen Messgeräten zur Verfügung gestellten Messwerte in einer den Geräten übergeordneten Einheit geeignet weiterverarbeitet werden.

So ist aus der bisher unveröffentlichten internationalen Patentanmeldung mit dem Aktenzeichen PCT/EP2019/064724 ein vibronischer Multisensor bekannt geworden, welcher zwei Messprinzipien - das vibronischer Messprinzip und das Ultraschall-Messprinzip - in einer einzigen Vorrichtung miteinander verbindet. Die Sensoreinheit führt einerseits mechanische Schwingungen aus; zudem wird ein Sendesignal ausgesendet. In Reaktion auf die mechanischen Schwingungen und auf das Sendesignal werden zwei Empfangssignale empfangen und hinsichtlich zumindest zwei unterschiedlicher Prozessgrößen ausgewertet. Die beiden Empfangssignale können dabei vorteilhaft unabhängig voneinander ausgewertet werden.

Ausgehend vom genannten Stand der Technik liegt der vorliegenden Erfindung die Aufgabe zugrunde, den Aufbau eines derartigen Multisensors zu vereinfachen.

Diese Aufgabe wird gelöst durch die Vorrichtung nach Anspruch 1.

Hinsichtlich der Vorrichtung wird die Aufgabe gelöst durch eine Vorrichtung zur Bestimmung und/oder Überwachung von zumindest einer Prozessgröße eines Mediums umfassend eine Sensoreinheit mit einer mechanisch schwingfähigen Einheit, zumindest einer Reflektionseinheit, und einem piezoelektrischen Element, welches an der Membran befestigt ist, und eine Elektronik. Die Vorrichtung ist dazu ausgestaltet, die mechanisch schwingfähige Einheit mittels eines Anregesignals zu mechanischen Schwingungen anzuregen, die mechanischen Schwingungen der schwingfähigen Einheit zu empfangen und in ein erstes Empfangssignal umzuwandeln, ein Sendesignal auszusenden, welches ein Ultraschallsignal umfasst, und ein zweites Empfangssignals zu empfangen, und die Elektronik ist dazu ausgestaltet, anhand des ersten und/oder zweiten Empfangssignals die zumindest eine Prozessgröße des Mediums zu bestimmen.

Das zumindest eine piezoelektrische Element dient einerseits als Antriebs-/Empfangseinheit zur Erzeugung der mechanischen Schwingungen der mechanisch schwingfähigen Einheit mittels des Anregesignals. Diese mechanischen Schwingungen werden im Falle, dass die schwingfähige Einheit von Medium bedeckt ist, von den Eigenschaften des Mediums beeinflusst, so dass anhand des ersten Empfangssignals, welches die Schwingungen der schwingfähigen Einheit repräsentiert, eine Aussage über eine Prozessgröße generierbar ist.

Das piezoelektrische Element dient andererseits aber auch zur Erzeugung des Sendesignals, welches in Form des zweiten Empfangssignals empfangen wird. Wenn das Sendesignal auf seinem Weg zumindest zeitweise und abschnittsweise das Medium durchläuft, wird es ebenfalls durch die physikalischen und/oder chemischen Eigenschaften des Mediums beeinflusst und kann entsprechend zur Bestimmung einer Prozessgröße des Mediums herangezogen werden.

Somit ist es im Rahmen der vorliegenden Erfindung möglich, zumindest zwei Messprinzipien in einer einzigen Vorrichtung zu realisieren. Die Sensoreinheit führt einerseits mechanische Schwingungen in Reaktion auf das Anregesignal aus; zudem wird ein Sendesignal ausgesendet. Anhand der zwei unabhängig voneinander auswertbaren Empfangssignale können dann eine oder mehrere, vorzugsweise zwei unterschiedliche, Prozessgrößen bestimmt werden. Die Möglichkeiten bei der Prozessgrößenbestimmung entsprechen den in der bisher unveröffentlichten internationalen Patentanmeldung mit dem Aktenzeichen PCT/EP2019/064724 beschriebenen.

Vorteilhaft kann der erfindungsgemäße Multisensor mit einem einzigen piezoelektrischen Element realisiert werden. Dies reduziert die Anzahl notwendiger elektrischer Zuleitungen. Das Ergebnis ist ein kostengünstiger Sensor, welcher hohen Sicherheitsanforderungen genügt, ein hohes Maß an Zuverlässigkeit gewährleistet und einen weiten Applikationsbereich abdeckt.

Erfindungsgemäß sind zumindest zwei Reflektionseinheiten vorhanden, welche jeweils in einem der Membran abgewandten Endbereich an die Schwingstäbe angeformt sind. Erfindungsgemäß sind die Reflektionseinheiten und die schwingfähige Einheit wie im unabhängigen Anspruch 1 spezifiziert ausgestaltet.

Eine weitere Ausgestaltung beinhaltet, dass die Vorrichtung eine Einheit zur Bestimmung und/oder Überwachung einer Temperatur des Mediums umfasst, wobei die Einheit zur Bestimmung und/oder Überwachung der Temperatur insbesondere einen Temperatursensor in Form eines Widerstandselements oder eines Thermoelements umfasst. In diesem Zusammenhang sei auf die bisher unveröffentlichte deutsche Patentanmeldung 102019116150.9 verwiesen, in welcher zahlreiche mögliche Ausgestaltungen für einen derartigen Multisensor mit Temperaturbestimmungseinheit angegeben sind.

Vorzugsweise ist die Einheit in einem Gehäuse der Vorrichtung angeordnet, welches Gehäuse in einem Endbereich mit der Membran abschließt. Auf diese Weise kann eine gute thermische Ankopplung an den Prozess erreicht werden.

Alternativ zu einer separaten Einheit zur Temperaturbestimmung ist es ebenfalls möglich, eine Überwachung der Temperatur des Mediums mittels des piezoelektrischen Elements durchzuführen, da die Kapazität eines piezoelektrischen Elements grundsätzlich temperaturabhängig ist. In diesem Falle wäre eine separate Vorrichtung zur Temperaturbestimmung nicht erforderlich.

Je nach Ausgestaltung der Sensoreinheit kann auch das Aussenden des Sendesignals in Form eines Ultraschallsignals, ebenso wie das Anregesignal, zu einer mechanischen Schwingung im Bereich der Sensoreinheit, insbesondere zu mechanischen Schwingungen der Membran, führen. Diese durch das Sendesignal hervorgerufenen ersten Schwingungen betreffen aber von den durch das Anregesignal hervorgerufenen Schwingungen zu unterscheidende zweite Schwingungen, insbesondere handelt es sich um zwei unterschiedliche Schwingungsmoden, und/oder sie betreffen unterschiedliche Komponenten der Sensoreinheit, z. B. betrifft das Sendesignal die Membran und das Anregesignal die Schwingelemente. Es ist somit ein Vorteil der vorliegenden Erfindung, dass bei gleichzeitiger Reduktion notwendiger Komponenten dennoch gewährleistbar ist, dass unabhängig von der Ausgestaltung der schwingfähigen Einheit das Sendesignal die Auswertung des ersten, in Reaktion auf das Anregesignal erfassten, ersten Empfangssignals nicht beeinflusst. Umgekehrt hat auch das Anregesignal keinen Einfluss auf das Anregesignal.

Das Sendesignal wird ausgehend von dem an der Membran befestigten piezoelektrischen Element ausgesendet und verläuft entlang eines Weges parallel zu den Schwingstäben zu den Reflektionseinheiten und von dort zurück zu dem piezoelektrischen Element. Durch diese Anordnung ergibt sich eine vergleichsweise lange Wegstrecke für das Sendesignal. Aufgrund dieser vergleichsweise langen Wegestrecke lässt sich mit einem derartigen Aufbau eine hohe Messgenauigkeit erzielen.

Es ist weiter von Vorteil, wenn die Reflektionseinheiten quaderförmig ausgestaltet sind, wobei jeweils eine Oberfläche jeder der Reflektionseinheiten parallel zu einer dem Prozess zugewandten Oberfläche der Membran ausgerichtet ist. Das Sendesignal wird in diesem Falle an der parallel zur Oberfläche der Membran ausgerichteten Oberfläche der Reflektionseinheiten reflektiert.

Die Reflektionseinheiten verlaufen erfindungsgemäß ausgehend von dem jeweiligen Schwingstab radial nach innen bezogen auf einen Mittelpunkt der dem Prozess zugewandten Oberfläche der Membran.

Vorzugsweise ist auf den Reflektionseinheiten zumindest im Bereich einer der Membran zugewandten Oberfläche jeweils eine reflektierende Beschichtung aufgebracht. Die reflektierende

Beschichtung umfasst insbesondere ein Material mit hoher akustischer Impedanz, vorzugsweise mit einer akustischen Impedanz, welcher größer ist als diejenige des Mediums. Beispielsweise kann die schwingfähige Einheit aus einem Kunststoff und die Beschichtung aus einem Metall, wie Edelstahl, Bronze, oder Aluminium, gefertigt sein. Es ist von Vorteil, wenn im Bereich der schwingfähigen Einheit eine sprungartige Änderung der akustischen Impedanz auftritt.

Es ist also nicht notwendig, die Reflektionseinheiten vollständig aus einem reflektierenden Material zu bilden. Vielmehr kann das Material zur Herstellung der Reflektionseinheiten an das der Schwingstäbe angepasst sein. Es reicht vielmehr eine reflektierende Beschichtung, welche vorzugsweise zumindest in einem Teilbereich der Oberfläche der Reflektionseinheiten, welche der dem Prozess zugewandten Oberfläche der Membran zugewandt ist, aus.

Schließlich ist es von Vorteil, wenn eine Summe der beiden der Membran zugewandten Oberflächen der beiden Reflektionseinheiten zumindest 20% der dem Prozess zugewandten Oberfläche der Membran und/oder des piezoelektrischen Elements beträgt. Vorzugsweise weist das piezoelektrische Element einen Querschnitt auf, welcher kleiner gleich dem Durchmesser der dem Prozess zugewandten Oberfläche der Membran entspricht. Auf diese Weise kann eine ausreichende Reflektion und ein ausreichendes Signal-zu-Rauschverhältnis erzielt werden.

Es ist ebenfalls möglich, die Vorrichtung ferner mit einer Einheit zur Bestimmung und/oder Überwachung eines Drucks und/oder eine Einheit zur Bestimmung und/oder Überwachung einer Leitfähigkeit und/oder Kapazität des Mediums zu versehen. Durch die Implementierung weiterer Messprinzipien in einem einzigen Sensor können der Applikationsbereich sowie die Messgenauigkeit, Verfügbarkeit und/oder Zuverlässigkeit des Sensors noch weiter verbreitert bzw. erhöht werden.

Es ist einerseits denkbar, dass die Sensoreinheit gleichzeitig mittels des Anregesignals und mittels des Sendesignals beaufschlagt wird, wobei das Anregesignal und das Sendesignal einander überlagert werden. Alternativ kann die Sensoreinheit aber auch abwechselnd mittels des Anregesignal und mittels des Sendesignals beaufschlagt werden.

Bei dem Anregesignal handelt es sich beispielsweise um ein elektrisches Signal mit zumindest einer vorgebbaren Frequenz, insbesondere um ein sinusförmiges oder um ein rechteckförmiges Signal. Vorzugsweise wird die mechanisch schwingfähige Einheit, welche Teil der Sensoreinheit ist, zumindest zeitweise zu Resonanzschwingungen angeregt. Die mechanischen Schwingungen werden durch das die schwingfähige Einheit umgebende Medium beeinflusst, so dass anhand eines die Schwingungen repräsentierenden Empfangssignals Rückschlüsse auf verschiedene Eigenschaften des Mediums möglich sind.

Bei dem Sendesignal handelt es sich um ein, insbesondere gepulstes, Ultraschallsignal insbesondere um zumindest einen Ultraschallpuls. Als zweites angewendetes Messverfahren wird demnach im Rahmen der vorliegenden Erfindung eine Ultraschall-basierte Messung, insbesondere nach dem Laufzeitprinzip, durchgeführt. Das jeweils ausgesendete Sendesignal durchläuft zumindest teilweise das Medium und wird von diesem in seinen Eigenschaften beeinflusst. Entsprechend können anhand des jeweils empfangenen zweiten Empfangssignals ebenfalls Rückschlüsse auf verschiedene Medien gezogen werden.

Mit der beschriebenen Vorrichtung ist eine Vielzahl unterschiedlicher Prozessgrößen mittels unterschiedlicher Messprinzipien ermittelbar. Unterschiedliche Prozessgrößen lassen sich vorteilhaft unabhängig voneinander bestimmen, so dass eine umfassende Analyse des jeweiligen Prozesses mittels eines einzigen Messgeräts ermöglicht wird. Dadurch, dass dieselbe Sensoreinheit für mehrere Messverfahren zum Einsatz kommt, kann darüber hinaus die Genauigkeit und/oder Zuverlässigkeit der Messungen deutlich erhöht werden. Darüber hinaus kann anhand der verschiedenen Messprinzipien eine Zustandsüberwachung der Vorrichtung vorgenommen werden.

Eine weitere besonders bevorzugte Ausgestaltung beinhaltet, dass es sich bei der zumindest einen Prozessgröße um einen vorgebbaren Füllstand, die Dichte, die Viskosität, die Schallgeschwindigkeit oder eine aus zumindest einer dieser Größen abgeleitete Größe handelt. Besonders bevorzugt wird anhand des ersten Empfangssignals die Dichte des Mediums und anhand des zweiten Empfangssignals die Schallgeschwindigkeit innerhalb des Mediums bestimmt. Es versteht sich jedoch von selbst, dass neben den hier explizit genannten Prozessgrößen auch weitere Prozessgrößen und/oder -parameter, welche mittels der beiden durchgeführten Messungen zugänglich sind, ebenfalls bestimmt und für eine Charakterisierung des jeweiligen Prozesses herangezogen werden können.

Noch eine besonders bevorzugte Ausgestaltung beinhaltet, dass anhand des ersten und zweiten Empfangssignals und/oder anhand der ersten und zweiten Prozessgröße eine erste Konzentration einer ersten in dem Medium enthaltenen Substanz und eine zweite Konzentration einer zweiten in dem Medium enthaltenen Substanz ermittelt wird. Gemäß Stand der Technik sind für eine derartige Analyse des Mediums auf zwei unterschiedliche Substanzen hin in der Regel zwei separate Messgeräte erforderlich, welche unterschiedliche Messgrößen bereitstellen. Erfindungsgemäß kann dagegen mittels einer einzigen Vorrichtung zuverlässig eine Aussage über zwei unterschiedliche Komponenten in einem Medium getätigt werden.

Schließlich beinhaltet eine vorteilhafte Ausgestaltung, dass anhand des ersten und zweiten Empfangssignals und/oder anhand der ersten und zweiten Prozessgröße ermittelt wird, ob sich ein Ansatz an der Sensoreinheit gebildet hat und/oder ob eine Drift und/oder Alterung der Sensoreinheit vorliegt. Die beiden Empfangssignale verhalten sich üblicherweise jeweils unterschiedlich in Abhängigkeit eines Ansatzes an der Sondeneinheit, einer Drift oder einer Alterung im Bereich der Sensoreinheit. Das Vorhandensein eines Ansatzes, einer Drift oder einer Alterung kann entsprechend beispielsweise anhand einer zeitlichen Betrachtung der beiden Empfangssignale und/oder Prozessgrößen festgestellt werden. Somit kann neben einer verbesserten Messgenauigkeit eine Möglichkeit zur vorausschauenden Wartung (engl. predictive maintenance) bereitgestellt werden.

Die Erfindung wird anhand der nachfolgenden Figuren näher erläutert. Es zeigt:
- Fig. 1:: eine schematische Skizze eines vibronischen Sensors gemäß Stand der Technik, und
- Fig. 2: beispielhafte Ausgestaltungen einer erfindungsgemäßen Vorrichtung.

In den Figuren sind gleiche Elemente jeweils mit demselben Bezugszeichen versehen.

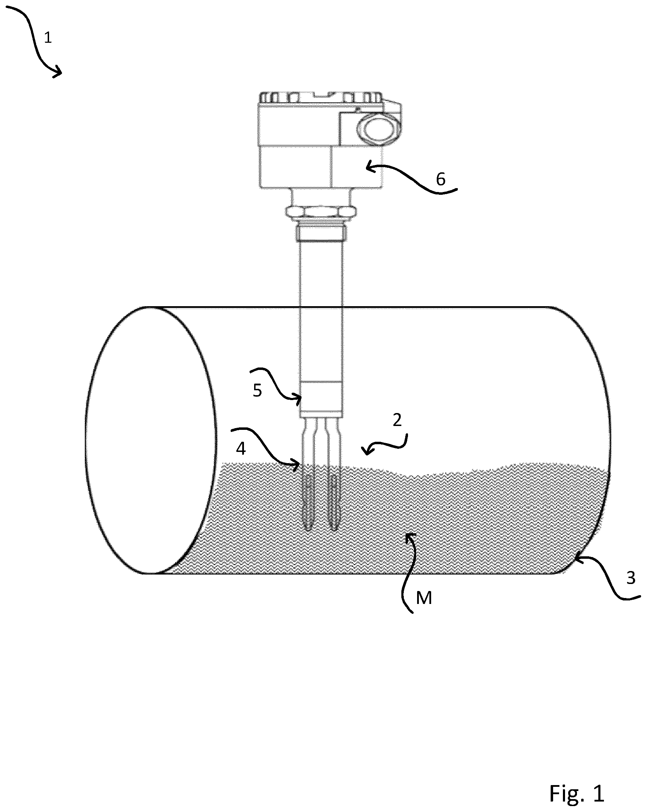

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs-/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

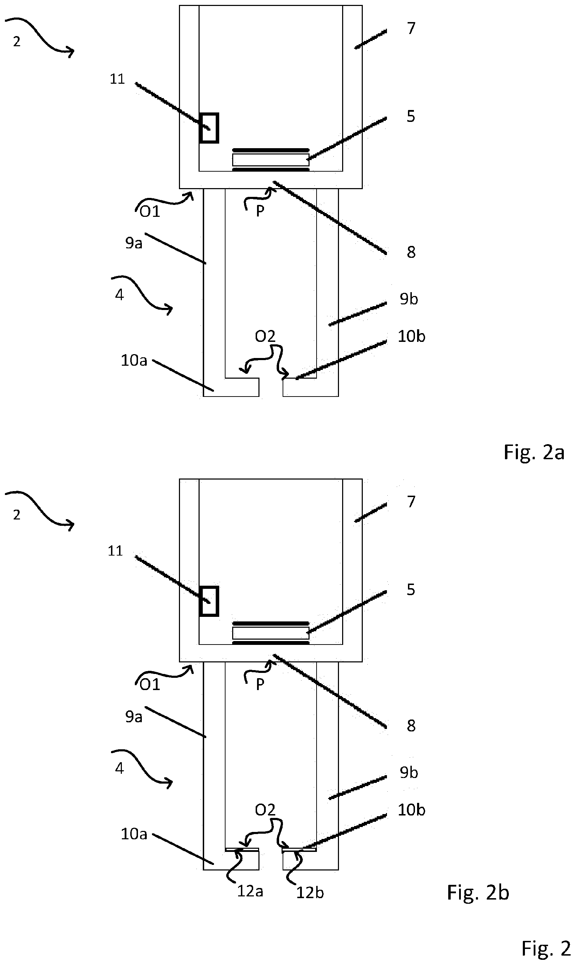

In Fig. 2 sind beispielhafte Ausgestaltungen für eine erfindungsgemäße Sensoreinheit 2 in Form von Schwinggabeln gezeigt. Die vorliegende Erfindung ist jedoch keineswegs auf eine derartige Ausgestaltung der schwingfähigen Einheit 4 beschränkt. Die in Fig. 2a gezeigte mechanisch schwingfähige Einheit 4 umfasst zwei an einer Membran 8 angebrachte Schwingstäbe 9a,9b, welche mithin auch als Gabelzinken bezeichnet werden. Die Membran 8 ist Teil eines Gehäuses 7 des Sensors 1, in welchem beispielsweise die hier nicht gezeigte Elektronik 6 angeordnet sein kann. Vorliegend schließt das Gehäuse 7 in einem dem Medium M zugewandten Bereich mit der Membran 8 ab. Die Antriebs-/Empfangseinheit 5 ist in Form eines piezoelektrischen Elements ausgestaltet, welches im dem Medium M abgewandten Bereich an der Membran 8 befestigt ist. Das piezoelektrische Element 5 befindet sich somit innerhalb des Gehäuses 7. In den der Membran 8 abgewandten Endbereichen der Schwingstäbe 9a,9b ist jeweils eine Reflektionseinheit 10,10b angeformt, welche jeweils senkrecht zu dem jeweiligen Schwingstab 9a,9b angeordnet ist. Beide Reflektionseinheiten 10,10b sind für die gezeigte Ausgestaltung quaderförmig ausgestaltet und verlaufen ausgehend von den Schwingstäben 9a,9b radial nach innen bezogen auf einen Mittelpunkt P der dem Medium M zugewandten Oberfläche O1 der Membran 8.

Die Reflektionseinheiten 10a,10b sind derart angeordnet, dass eine Oberfläche O2 von jedem der beiden Reflektionseinheiten 10a,10b parallel zur dem Medium M zugewandten Oberfläche O1 der Membran 8 verläuft.

Die dargestellte Sensoreinheit 2 verfügt ferner über eine Einheit 11 zur Bestimmung und/oder Überwachung der Temperatur T des Mediums M, welche ebenfalls innerhalb des Gehäuses 7 angeordnet ist. Diese kann beispielsweise einen Temperatursensor in Form eines Widerstandselements oder eines Thermoelements umfassen.

Für die in Fig. 2a dargestellte Ausgestaltung sind beide Reflektionseinheiten 10a, 10b aus einem reflektierenden Material, beispielsweise einem Metall, gefertigt. Dies ist insbesondere im Falle einer metallischen schwingfähigen Einheit 4 von Vorteil.

Eine alternative Ausgestaltung ist in Fig. 2b dargestellt. Im Unterschied zu der in Fig.2a dargestellten Ausführung ist auf jeder der beiden Reflektionseinheiten 10a,10b im Bereich der der Membran 8 zugewandten Oberfläche O2 eine reflektierende, vorzugsweise metallische Beschichtung 12a,12b aufgetragen. In diesem Falle können die Reflektionseinheiten 10a,10b aus einem beliebigen anderen Material, vorzugsweise auf demselben Material, wie das für die Schwingstäbe 9a,9b verwendete, hergestellt sein.

### Bezugszeichenliste

- 1: Vibronischer Sensor
- 2: Sensoreinheit
- 3: Behälter
- 4: Schwingfähige Einheit
- 5: Antriebs-/Empfangseinheit
- 6: Elektronik
- 7: Gehäuse
- 8: Membran
- 9a, 9b: Schwingelemente
- 10a, 10b: Reflektionseinheiten
- 11: Einheit zur Bestimmung und/oder Überwachung der Temperatur
- 12a,12b: reflektierende Beschichtung

- M: Medium
- P: Prozessgröße
- T: Temperatur
- O1: dem Prozess zugewandte Oberfläche der Membran
- O2: parallel zu O1 angeordnete Oberfläche der Reflektionseinheit
- P: Mittelpunkt der Oberfläche O1 der Membran

## Patentansprüche

1. Vorrichtung (1) zur Bestimmung und/oder Überwachung von zumindest einer Prozessgröße eines Mediums (M) umfassend
eine Sensoreinheit (2) mit
einer mechanisch schwingfähigen Einheit (4),
zumindest einer Reflektionseinheit (10a,10b), und
einem piezoelektrischen Element (5), welches an einer Membran (8) befestigt ist,
und mit
einer Elektronik (6),
wobei die Vorrichtung (1) dazu ausgestaltet ist,
die mechanisch schwingfähige Einheit (4) mittels eines Anregesignals zu mechanischen Schwingungen anzuregen,
die mechanischen Schwingungen der schwingfähigen Einheit (4) zu empfangen und in ein erstes Empfangssignal umzuwandeln,
ein Sendesignal auszusenden, welches ein Ultraschallsignal umfasst, und dieses als ein zweites Empfangssignal zu empfangen,
wobei die Elektronik (6) dazu ausgestaltet ist, anhand des ersten und/oder zweiten Empfangssignals die zumindest eine Prozessgröße des Mediums (M) zu bestimmen,
wobei die mechanisch schwingfähige Einheit (4) die Membran (8) und zwei an der Membran (8) angeformte Schwingstäbe (9a,9b) aufweist,
wobei das piezoelektrische Element (5) in einem den Schwingstäben (9a,9b) abgewandten Bereich der Membran (8) an der Membran (8) befestigt ist;
**dadurch gekennzeichnet, dass**
zumindest zwei Reflektionseinheiten (10a, 10b) vorhanden sind, welche jeweils in einem der Membran (8) abgewandten Endbereich an die Schwingstäbe (9a,9b) angeformt sind,
wobei die zwei Reflektionseinheiten (10a,10b) zumindest abschnittsweise senkrecht zu den Schwingstäben (9a,9b) ausgerichtet sind,
wobei die Reflektionseinheiten (10a,10b) ausgehend von den Schwingstäben (9a,9b) einander zugewandt ausgerichtet sind, indem sie ausgehend von dem jeweiligen Schwingstab radial nach innen bezogen auf einen Mittelpunkt der dem Prozess zugewandten Oberfläche der Membran (8) verlaufen, und
wobei die Reflektionseinheiten (10a,10b) dazu ausgestaltet sind, das Sendesignal, welches das Ultraschallsignal umfasst, zu dem piezoelektrischen Element (5) zurück zu reflektieren.

2. Vorrichtung (1) nach Anspruch 1,
umfassend eine Einheit (11) zur Bestimmung und/oder Überwachung einer Temperatur (T) des Mediums (M), wobei die Einheit (11) zur Bestimmung und/oder Überwachung der Temperatur (T) insbesondere einen Temperatursensor in Form eines Widerstandselements oder eines Thermoelements umfasst.

3. Vorrichtung (1) nach zumindest einem der Ansprüche 1 oder 2,
wobei die Reflektionseinheiten (10a,10b) quaderförmig ausgestaltet sind, wobei jeweils eine Oberfläche (O2) jeder der Reflektionseinheiten (10a,10b) parallel zu einer dem Prozess zugewandten Oberfläche (O1) der Membran (8) ausgerichtet ist.

4. Vorrichtung (1) nach zumindest einem der Ansprüche 1-3,
wobei auf den Reflektionseinheiten (10a,10b) zumindest im Bereich einer der Membran (8) zugewandten Oberfläche (O2) jeweils eine reflektierende Beschichtung (11a,11b) aufgebracht ist.

5. Vorrichtung (1) nach zumindest einem der Ansprüche 1-4,
wobei eine Summe der beiden der Membran (8) zugewandten Oberflächen (O2) der beiden Reflektionseinheiten (10a,10b) zumindest 20% der dem Prozess zugewandten Oberfläche (O1) der Membran (8) und/oder des piezoelektrischen Elements (5) beträgt.

6. Vorrichtung (1) nach zumindest einem der Ansprüche 1-5,
wobei es sich bei der zumindest einen Prozessgröße die Dichte, die Viskosität, die Schallgeschwindigkeit oder eine aus zumindest einer dieser Größen abgeleitete Größe handelt,

7. Vorrichtung nach zumindest einem der Ansprüche 1-6,
welche dazu eingerichtet ist, anhand des ersten und zweiten Empfangssignals und/oder anhand der ersten und zweiten Prozessgröße eine erste Konzentration einer ersten in dem Medium (M) enthaltenen Substanz und eine zweite Konzentration einer zweiten in dem Medium (M) enthaltenen Substanz zu ermitteln.

8. Vorrichtung nach zumindest einem der Ansprüche 1-7,
welche dazu eingerichtet ist, anhand des ersten und zweiten Empfangssignals und/oder anhand der ersten und zweiten Prozessgröße zu ermitteln, ob sich ein Ansatz an der Sensoreinheit (2) gebildet hat und/oder ob eine Drift und/oder eine Alterung der Sensoreinheit (2) vorliegt.

## Claims

1. A device (1) for determining and/or monitoring at least one process variable of a medium (M), comprising
a sensor unit (2) with
a unit that can mechanically oscillate (4),
at least one reflection unit (10a, 10b), and
a piezoelectric element (5), which is attached to a membrane (8),
and with
electronics (6),
wherein the device (1) is configured to
cause the unit that can mechanically oscillate (4) to mechanically oscillate using an excitation signal,
receive the mechanical oscillations of the unit that can oscillate (4) and convert them into a first received signal,
send a transmission signal, which comprises an ultrasonic signal, and receive this as a second received signal,
wherein the electronics (6) are configured to determine the at least one process variable of the medium (M) on the basis of the first and/or second received signal,
wherein the unit that can mechanically oscillate (4) has the membrane (8) and two oscillating rods (9a, 9b) molded on to the membrane (8),
wherein the piezoelectric element (5) is attached to the membrane (8) in an area of the membrane (8) facing away from the oscillating rods (9a, 9b);
**characterized in that**
at least two reflection units (10a, 10b) are present, each of which is molded on to the oscillating rods (9a, 9b) in an end area facing away from the membrane (8),
wherein at least sections of the two reflection units (10a, 10b) are aligned perpendicular to the oscillating rods (9a, 9b),
wherein the reflection units (10a, 10b) are aligned facing each other, starting from the oscillating rods (9a, 9b), **in that** they run radially inward based on a center point of the surface of the membrane (8) facing the process, starting from the respective oscillating rod, and
wherein the reflection units (10a, 10b) are configured to reflect the transmission signal, comprising the ultrasonic signal, back to the piezoelectric element (5).

2. The device (1) as claimed in claim 1,
comprising a unit (11) for determining and/or monitoring a temperature (T) of the medium (M), wherein the unit (11) for determining and/or monitoring the temperature (T) in particular comprises a temperature sensor in the form of a resistive element or a thermocouple.

3. The device (1) as claimed in at least one of claims 1 or 2,
wherein the reflection units (10a, 10b) have a cuboidal design, wherein one surface (02) of each of the reflection units (10a, 10b) is aligned parallel to a surface (01) of the membrane (8) facing the process.

4. The device (1) as claimed in at least one of claims 1 to 3,
wherein a reflective coating (11a, 11b) is applied to each reflection unit (10a, 10b) at least in the area of a surface (02) facing the membrane (8).

5. The device (1) as claimed in at least one of claims 1 to 4,
wherein a total of the two surfaces (02) of the two reflection units (10a, 10b) facing the membrane (8) is equal to at least 20% of the surface (01) of the membrane (8) and/or of the piezoelectric element (5) facing the process.

6. The device (1) as claimed in at least one of claims 1 to 5,
wherein the at least one process variable is the density, the viscosity, the speed of sound or a variable derived from at least one of these variables.

7. The device as claimed in at least one of claims 1 to 6,
which is configured to determine a first concentration of a first substance contained in the medium (M) and a second concentration of a second substance contained in the medium (M) on the basis of the first and second received signals and/or on the basis of the first and second process variables.

8. The device as claimed in at least one of claims 1 to 7,
which is configured to determine whether deposits have formed on the sensor unit (2) and/or whether the sensor unit (2) has experienced drift and/or aging based on the first and second received signals and/or based on the first and second process variables.

## Revendications

1. Dispositif (1) destiné à la détermination et/ou à la surveillance d'au moins une grandeur de process d'un produit (M), lequel dispositif comprend
une unité de capteur (2) avec
une unité apte à vibrer mécaniquement (4),
au moins une unité de réflexion (10a, 10b), et
un élément piézoélectrique (5), lequel est fixé à une membrane (8),
et avec
une électronique (6),
le dispositif (1) étant conçu pour
exciter l'unité apte à vibrer mécaniquement (4) en vibrations mécaniques au moyen d'un signal d'excitation,
recevoir les vibrations mécaniques de l'unité apte à vibrer mécaniquement (4) et les convertir en un premier signal de réception,
émettre un signal d'émission, lequel comprend un signal ultrasonore, et recevoir celui-ci en tant que deuxième signal de réception,
l'électronique (6) étant conçue pour déterminer, à l'aide du premier et/ou du deuxième signal de réception, l'au moins une grandeur de process du produit (M),
l'unité apte à vibrer mécaniquement (4) comprenant la membrane (8) et deux tiges vibrantes (9a, 9b) formées sur la membrane (8),
l'élément piézoélectrique (5) étant fixé à la membrane (8) dans une zone de la membrane (8) opposée aux tiges vibrantes (9a, 9b) ;
**caractérisé en ce**
**qu'**au moins deux unités de réflexion (10a, 10b) sont présentes, lesquelles unités sont formées respectivement dans une zone d'extrémité opposée à la membrane (8) sur les tiges vibrantes (9a, 9b),
les deux unités de réflexion (10a, 10b) étant orientées au moins par sections perpendiculairement aux tiges vibrantes (9a, 9b),
les unités de réflexion (10a, 10b) étant orientées en face l'une de l'autre à partir des tiges vibrantes (9a, 9b) en s'étendant radialement vers l'intérieur à partir de la tige vibrante respective par rapport à un centre de la surface de la membrane (8) orientée vers le process, et
les unités de réflexion (10a, 10b) étant configurées pour réfléchir le signal d'émission, lequel comprend le signal ultrasonore, en retour vers l'élément piézoélectrique (5).

2. Dispositif (1) selon la revendication 1,
lequel dispositif comprend une unité (11) destinée à la détermination et/ou à la surveillance d'une température (T) du produit (M), l'unité (11) destinée à la détermination et/ou à la surveillance de la température comprenant notamment un capteur de température sous la forme d'un élément de résistance ou d'un thermocouple.

3. Dispositif (1) selon au moins l'une des revendications 1 ou 2,
pour lequel les unités de réflexion (10a, 10b) sont conçues en forme de parallélépipède, une surface (02) de chacune des unités de réflexion (10a, 10b) étant respectivement orientée parallèlement à une surface (O1) de la membrane (8) tournée vers le process.

4. Dispositif (1) selon au moins l'une des revendications 1 à 3,
pour lequel un revêtement réfléchissant (11a, 11b) est respectivement appliqué sur les unités de réflexion (10a, 10b) au moins dans la zone d'une surface (02) tournée vers la membrane (8).

5. Dispositif (1) selon au moins l'une des revendications 1 à 4,
pour lequel une somme des deux surfaces (02) tournées vers la membrane (8) des deux unités de réflexion (10a, 10b) représente au moins 20 % de la surface (O1) de la membrane (8) et/ou de l'élément piézoélectrique (5) tournée vers le process.

6. Dispositif (1) selon au moins l'une des revendications 1 à 5,
pour lequel l'au moins une grandeur de process est la densité, la viscosité, la vitesse du son ou une grandeur dérivée d'au moins l'une de ces grandeurs.

7. Dispositif (1) selon au moins l'une des revendications 1 à 6,
lequel dispositif est conçu pour déterminer, à l'aide du premier et du deuxième signal de réception et/ou à l'aide de la première et de la deuxième grandeur de process, une première concentration d'une première substance contenue dans le produit (M) et une deuxième concentration d'une deuxième substance contenue dans le produit (M).

8. Dispositif (1) selon au moins l'une des revendications 1 à 7,
lequel dispositif est conçu pour déterminer, à l'aide du premier et du deuxième signal de réception et/ou à l'aide de la première et de la deuxième grandeur de process, la formation d'un dépôt sur l'unité de capteur (2) et/ou l'existence d'une dérive et/ou d'un vieillissement de l'unité de capteur (2).
